**Europäisches Patentamt**

**European Patent Office**

**Office européen des brevets**

(19)

(11) Publication number: **0 014 790**

**A1**

(12)

# EUROPEAN PATENT APPLICATION

(21) Application number: **79300288.2**

(22) Date of filing: **23.02.79**

(51) Int. Cl.³: **A 47 B 47/03**
**F 16 B 7/04**

(43) Date of publication of application:
**03.09.80 Bulletin 80/18**

(84) Designated Contracting States:
**BE CH DE FR GB IT LU NL SE**

(71) Applicant: **Martes, Antonio Ortega**
**Camino del Vado, 2a**
**Travesia Ind. Zaragoza(ES)**

(72) Inventor: **Martes, Antonio Ortega**
**Camino del Vado, 2a**
**Travesia Ind. Zaragoza(ES)**

(74) Representative: **Pearce, Anthony Richmond et al,**
**Marks & Clerk Alpha Tower ATV Centre**
**Birmingham B1 1TT(GB)**

(54) **Modular shelving system.**

(57) A modular shelving system comprises a plurality of tubes (1) connected together in the desired manner by end and intermediate connectors (5 and 8). Each connector (5, 8) comprises three mutually perpendicular tubes (5a, 5b and 5c; 8a, 8b and 8c). Strengthening flanges (21, 24) on the connectors (5, 8) serve to support horizontal panels (22) whilst vertical panels (16) are held by supports (10) engaged with flanges (23) of the connectors (5,8). The system is mounted on adjustable feet (14) and is strengthened by a variety of strengtheners (6, 9, 3) and can be secured to a wall by means of (3a, 4). A tube (1a) is suspended by means of support brackets (2) in a plane below a plane in which lie tubes (1) with which the support brackets (2) are engaged.

The system is formed of very simple components but is yet strong and versatile.

./...

Croydon Printing Company Ltd.

Fig.8

## TITLE

"MODULAR SHELVING SYSTEM"

### FIELD TO WHICH THE INVENTION RELATES

This invention relates to a modular shelving
system and more particularly to a kit of parts which
can be erected to form a shelving system.

### DISCLOSURE OF THE INVENTION

A very simple, easy to erect, and sturdy
modular shelving system comprises basically a plurality
of tubes having different lengths but a common diameter,
a plurality of connectors for connecting the tubes
together so as to produce a shelving structure.

A wide variety of different shapes of shelving
structure can be produced and the versatility of the
shelving unit can be increased by the provision of
various different accessory parts.

### BRIEF DESCRIPTION OF THE DRAWINGS

Fig. 1 is a plan view of one embodiment of a
modular shelving system according to the present
invention in an erected condition,

Fig. 2 is a partial section on the line C-C
of Fig. 1,

Fig. 3 is a sectional view in the direction of arrow A-A in Fig. 1,

Fig. 4 is an elevational view of an adjustable leg with a foot pad for adjustably supporting the modular shelving system,

Fig. 5 is a view of an adjustable leg with a castor wheel, for supporting the modular shelving system,

Fig. 6 is a sectional view of a connector and a vertical panel support forming part of the modular shelving system of Fig. 1,

Fig. 7 is a section on the line B-B of Fig. 6, and

Fig. 8 is a front elevational view of the modular shelving system of Fig. 1.

Referring now to the drawings, the modular shelving system comprises a plurality of tubes 1 which are of differing lengths but of the same external diameter, and  a plurality of end connectors 5 and intermediate connectors 8 for joining the tubes 1 together to form a shelving structure.  The end connectors 5 are used exclusively for making corners of the structure.

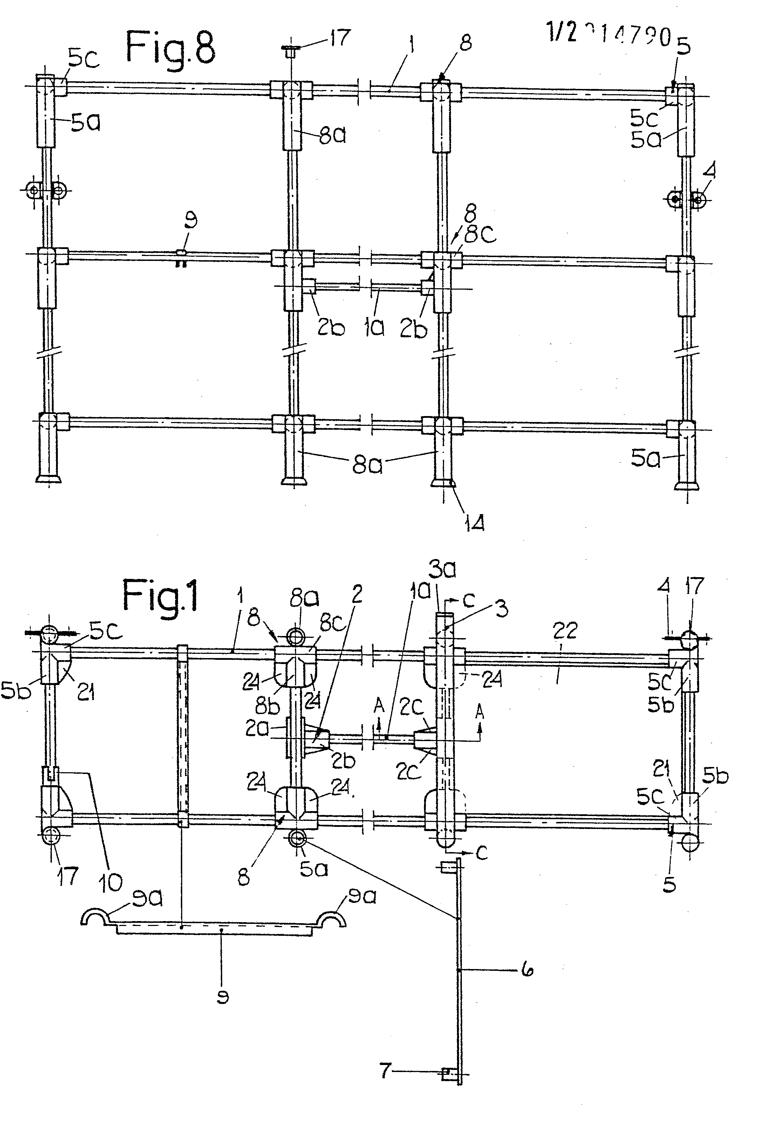

Each end connector 5 comprises three sleeves 5a, 5b, and 5c which are of different lengths.  The sleeves 5b and 5c are arranged with their axes co-planar and 90$^o$ apart to define an L, whilst the sleeve 5a is longer than the other two sleeves 5b and 5c and extends with its axis perpendicular to the plane of the L.  As can be seen from Fig. 1, the sleeve 5a is joined to the sleeve 5c at a location adjacent the external corner of the L shape.  The sleeve 5a is open at both ends but is closed by a centre partition 20. The sleeves 5b and
5c have their mutually adjacent ends closed so that
the same length of tube 1 can be inserted therein. Each
end connector 5 further includes an integral planar flange
21 which is disposed in the plane in which the axes of the
sleeves 5b and 5c lie and which serves as a strengthener
between the sleeves 5b and 5c and also as a support for
a horizontal shelving panel 22 (see Fig. 1). Each end
connector 5 further includes a further integral planar
flange 23 which is disposed in a plane in which the
longitudinal axes of the sleeves 5b and 5a lie. This
flange 23 serves to increase the strength of the joint
between the sleeve 5a and the remainder of the connector
5 and also serves to locate a support 10 for vertical
panels 16 (see particularly Figs. 6 and 7). The support
10 will be described hereinafter in greater detail.

Each intermediate connector is, like each end
connector 5, a moulded component and comprises three
sleeves 8a, 8b and 8c. Sleeve 8a is the longest sleeve
and, like the sleeve 5a previously described, is open
at both ends but closed by a central partition so that
the same length of tube 1 can be inserted into each end.
The sleeves 8b and 8c are arranged in the form of a
T with the plane of the T being perpendicular to the
longitudinal axis of the sleeve 8a. The sleeve 8a is
joined to the sleeve 8c centrally of the ends of the
sleeve 8c and on the opposite side thereof to the sleeve
8b. Sleeve 8b is closed at its end adjacent the sleeve 8c.
The sleeve 8c is open at both ends but closed by an
intermediate partition (not shown). The arrangement is
such that the same length of tube 1 can be inserted
into the three sleeves 8a to 8c, this being the same
length of tube which can be inserted into the sleeves
5a to 5c. Each intermediate connector 8 has a pair of
co-planar flanges 24 extending on diametrically opposite
sides of the sleeve 8b and being integrally joined therewith as well as with the portions of the sleeve 8c
on opposite sides of the sleeve 8b. The flanges
24 extend in the plane in which the longitudinal axes
of the sleeves 8b and 8c lie. Although it is not
shown in the drawings, each intermediate connector
8 has a flange which is integrally joined with the
sleeve 8a and with the sleeve 8b and which is similar
to the flange 23 of the end connector 25. This un-
referenced flange of the intermediate connector 8 serves
to locate a vertical panel support 10.

Each vertical panel support 10 comprises a cylindrical body 25 of circular cross-section having diametrically
opposed integral housings 26 defining outwardly opening
rectangular slots 27 which are open at an end thereof
remote from a connector 5 or 8 in use. Each slot 27 is
closed at its end opposite to its open end by an integral
stop 28. A pair of integral, parallel lips 29 extend
from the lower of the two stops 28 away from the slots
27 in a direction parallel to the axis of the cylindrical
body 25. The cylindrical body 25 has an internal
diameter of a size to fit over the tubes 1. In use, the
cylindrical body 25 is slipped over one of the tubes 1
and moved until it is in abutment with, for example, the
sleeve 5b of a connector 5 (see Fig. 6). Before abutting
against the sleeve 5b the cylindrical body 25 is
orientated so that the space between the parallel lips
29 is aligned with the flange 23. Thus, when the cylindrical body 25 is engaged with the sleeve 5b, the lips 29
embrace the flange 23 and hold the support 10 in an
orientation in which one housing 26 lies vertically above
the other. In this location, it can be seen that a
respective corner of the vertical panel 16 can be located
in the appropriate slot 27 so that the vertical panel
16 can be held in the required position. The horizontal
shelving panels 22 are supported upon the flanges 21 and
24 as can be seen from Fig. 1.

The shelving structure is supported on a surface by means of adjustable feet. Referring now to Fig. 4, one type of foot comprises a body 12 with which a bolt 13 is engaged in screw-threaded fashion. The end of the bolt 13 from the body 12 carries a foot pad 13. The top of the body 12 is provided with a groove 11 which engages a tongue (not shown) fitted into each of those connectors which are at the bottom of the structure (see Fig. 8). In Fig. 5, the foot is similar to that described with reference to Fig. 4 except that the foot pad 14 is replaced by a castor wheel 15. Castor wheels are preferably only used in those shelving systems which are not excessively top heavy.

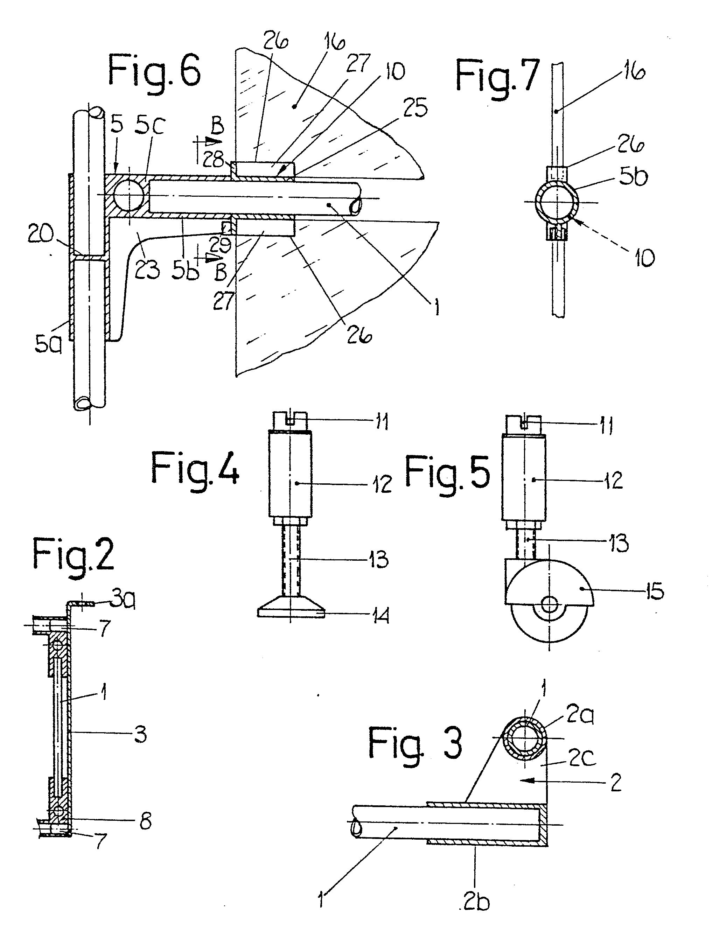

Referring now to Figs. 1 and 2, the rigidity of the system is improved by the provision of strengtheners 9 having hooked ends 9a of a size to fit over any desired pair of tubes 1 on opposite sides of the structure. Strengthening can be further improved by the provision of a further type of strengthener 6 which comprises simply a strip having a pair of studs 7 at opposite ends thereof. The studs 7 fit into the unused upper ends of the sleeves 8a or 5a of the connectors at the top of the structure. A still further kind of strengthener 3 is shown in Fig. 1. Strengthener 3 is similar to strengthener 6 except that it is extended in one direction beyond the studs and bent upwardly to provide an apertured flange 3a. A fastening screw or the like can be passed through the aperture in the flange 3a to secure the structure to a wall. Additional securing to the wall can be effected at any desired location by means of fastening brackets 4 which have a central arcuate portion of a size to fit over the tubes 1 and apertured ends to enable fixing screws to be passed therethrough for wall mounting.

Blanking plugs 17 (see particularly Fig. 8) are provided for closing otherwise open ends of the connector sleeves.

The modular shelving system further includes support brackets 2. Each support bracket 2 comprises a sleeve 2a which is open at both ends, a sleeve 2b which has its longitudinal axis extending at right angles to the axis of the sleeve 2a, and flanges 2c joining the sleeves 2a and 2b. The sleeve 2b is closed at one end and open at the other and the arrangement is such that the base of the closed end of the sleeve 2b and the generatrix of the other sleeve 2b both lie in the same plane. A tube 1a forming a support rail or rack is engaged in the sleeves 2b of two of the support brackets 2, the length of such support rail or rack being equal to the width of any one of the spaces defined within the system.

It will be apparent that horizontal panels 22 can be located anywhere in the system on appropriate flanges 21 and 24 and that vertical panel supports 10 can also be provided anywhere in the system either in association with connectors 5 or with connectors 8.

As will be appreciated from the foregoing description, the modular shelving system described above can be easily assembled due to the simplicity of its component parts. However, the simplicity of the component parts in no way detracts from the sturdiness of the resultant structure or in its versatility to be assembled in a large number of different arrangements.

## CLAIMS

1.    A modular shelving system comprising a plurality
of tubes (1) of differing lengths, connectors (5, 8)
for joining the tubes (1) together, means (14, 15, 6, 9,
3, 4) for adjustably supporting and steadying an
assembly of the tubes (1) and connectors (5, 8),
supports (10) which are attached to the connectors
(5, 8), in use and which can support and hold vertical
panels (16), and bracket supports (21, 24) on said connectors (5, 8) for supporting horizontal panels (22) in use,
the tubes (1) being capable of having components (2) fitted
thereto to hold another tube (1a) to serve as a support
rail or rack.

2.    A system as claimed in claim 1, wherein each
connector (5,8) has a portion (5a, 8a) which extends
vertically in use and which can accommodate tubes (1)
from above and below, and other portions (5b, 5c and
8b 8c) for accommodating other tubes (1), said other
portions (5b, 5c and 8b, 8c) being co-planar and
disposed at right angles to the first mentioned
portion (5a, 8a), said portions being strengthened
by the bracket supports (21, 24) and by a strengthening
member (23) which is engageable with one of the supports
(10) for the vertical panels (16).

3.    A system as claimed in claim 1 or 2, wherein
said adjustable supporting means (14, 15) comprises a foot which is engageable in one of the connectors
(5, 8) and which comprises a tubular body (12)
which axially accommodates a bolt (13) upon whose
free end a foot pad (14) is arranged.

4.    A system as claimed in claim 3, wherein the foot
pad (14) is replaced by a wheel (15).

5.    A system as claimed in any preceding claim,
wherein said steadying means includes a strip (3, 6)
provided with a pair of studs (7) which can be engaged
in the connectors (5, 8).

6.    A system as claimed in claim 5, wherein the
strip (3) has an extension providing a fixing bracket
(3a).

7.    A system as claimed in any preceding claim, wherein
said steadying means includes a strengthener (9)
having ends (9a) shaped to mate with the tubes (1).

8.    A system as claimed in any preceding claim,
wherein each support (10) comprises a tubular body
(25) having a pair of diametrically opposed housings
(26) for holding the vertical panels (16), and each
support (10) further has a pair of parallel lips (29)
which embrace a part (23) of one of the connectors
(5, 8) in use.

9.    A system as claimed in any preceding claim,
wherein each component (2) for holding the support
rail or rack comprises a pair of mutually perpendicular
sleeves (2a, 2b) connected together by means of at least
one bracket (2c) that serve to separate the sleeves
(2a and 2b) whereby the tube (1a) which serves as the
support rail or rack is spaced from a plane in which the

0014790

tubes (1) to which the compoents (2) are fitted lie
whereby sufficient room is allowed for hangers to be placed
on the support rail or rack without difficult.

Fig.8

1/2 014790

Fig.1

Fig.6

Fig.7

Fig.4

Fig.5

Fig.2

Fig. 3

## DOCUMENTS CONSIDERED TO BE RELEVANT

| Category | Citation of document with indication, where appropriate of relevant passages | Relevant to claim |
|---|---|---|
| X | <u>BE - A - 462 110</u> (VINCENT)<br>* Page 3; page 4, paragraphs 1,2; figures 1-15 *<br>& GB - A - 619 923<br><br>-- | 1,2 |
|  | <u>GB - A - 1 315 350</u> (PROVOST)<br>* Page 2, lines 5-8; figures 1-4 *<br><br>-- | 3,4 |
|  | <u>GB - A - 908 454</u> (JARNFORADLINGS VASTERVIKSFABRIK)<br>* Claim 1; figure 4 *<br><br>-- | 7 |
|  | <u>FR - A - 1 117 892</u> (DABROWSKI)<br>* Page 2, column 2, paragraphs 4,5; figure 6 *<br><br>-- | 8 |
|  | <u>GB - A - 20 777</u> (A.D. 1909)(CUN-NINGHAM)<br>* Page 2, lines 19-34; figure 1 *<br><br>---- | 1,4,9 |

**CLASSIFICATION OF THE APPLICATION (Int. Cl. )**

A 47 B 47/03
F 16 B 7/04

**TECHNICAL FIELDS SEARCHED (Int.Cl. )**

A 47 B
F 16 B
A 47 F

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 24-10-1979 | SCHMITTER |

EPO Form 1503.1  06.78